# EUROPEAN PATENT SPECIFICATION

(11) **EP 4 488 551 B1**
(45) Date of publication and mention of the grant of the patent: **21.10.2026**
(21) Application number: 24187236.5
(22) Date of filing: 08.07.2024
(51) Int. Cl.: F16H 57/04, B60K 1/02, B60K 6/42, B60K 6/48, F16H 57/02, H02K 9/19, H02K 7/116, B60K 6/405, H02K 1/00, B60K 1/00, B60K 6/26, B60K 6/40, B60K 6/442

(54) **FLUID CIRCUIT FOR COOLING AND LUBRICATING A HYBRID VEHICLE DRIVE ASSEMBLY**
FLUIDKREISLAUF ZUR KÜHLUNG UND SCHMIERUNG EINER HYBRIDFAHRZEUGANTRIEBSANORDNUNG
CIRCUIT DE FLUIDE POUR LE REFROIDISSEMENT ET LA LUBRIFICATION D'UN ENSEMBLE D'ENTRAÎNEMENT DE VÉHICULE HYBRIDE

(30) Priority: 07.07.2023 FR 2307263
(43) Date of publication of application: 08.01.2025
(73) Proprietor: Horse Powertrain Solutions, S.L.U., 28108 Alcobendas (Madrid) (ES)
(72) Inventor: BOISADAN, Fabrice, 78280 Guyancourt (FR); MARCHAL, Nicolas, 78280 Guyancourt (FR); MAUDET, Frederic, 78280 Guyancourt (FR)
(74) Representative: Elzaburu S.L.P.

(56) References cited:
- WO-A1-2019/194072
- WO-A1-2019/202945
- JP-B2- 3 182 987
- US-A1- 2022 316 581
- US-A1- 2023 136 544
- US-B2- 11 499 625
- US-B2- 7 637 336

## Description

The present invention relates to the field of cooling and lubrication systems for a hybrid drive assembly of a vehicle. The present invention relates more particularly to the cooling and lubrication of such a hybrid assembly by means of the same fluid.

Vehicles, and in particular motor vehicles, are increasingly hybrid vehicles. These hybrid vehicles are set in motion by a hybrid assembly in which a main electric motor and a generator participate in the setting in motion of the vehicle, the main electric motor and the generator participating together or individually in transmitting a torque to a gearbox in which, for example, pinions transmit the generated torque to drive shafts.

The main electric motor and generator are elements that generate heat during their operation. This heat, in too large a quantity, is detrimental to the proper operation of the main electric motor and the generator. It is thus known to implement cooling fluid circuits around each of these elements to cool them, each of these elements being housed conventionally in its own casing that must be cooled individually.

The gearbox is an element of the hybrid assembly in which many pinions are made to mesh and rub against each other, so that it is necessary to lubricate this gearbox, both to limit the wear of the parts and the friction forces between these parts. It is thus known to implement a lubrication fluid circuit within the gearbox to lubricate the various parts.

The implementation of these circuits generally involves a water circuit to cool the main electrical machine, another water circuit to cool the generator and an oil circuit to lubricate the gearbox. The accumulation of these circuits significantly increases the size of the hybrid assembly, the complexity of the circuits implemented and the risk of leaks.

The present invention fits into this context and proposes to overcome at least some of the disadvantages of the prior art. The present invention proposes in particular to reduce the number of circuits used to cool and lubricate the hybrid assembly.

It is known document WO2019194072A1 disclosing a motor unit connected to an engine, the motor unit being provided with: a motor; a transmission mechanism for transmitting motive power of the engine and the motor and outputting from an output shaft; a clutch which is provided to the transmission mechanism and is capable of switching a transmission path of motive power of the engine; a housing in which an accommodating space for accommodating the motor and the transmission mechanism is provided; oil accumulated in a lower region of the accommodating space; and a pump unit for drawing up oil from the lower region of the accommodating space and supplying the oil to the motor, the pump unit being provided to the transmission mechanism and driven by motive power of the engine. The pump unit is positioned on an engine side with respect to the clutch in a path of transmission of the motive power of the engine. Document WO 2019/202945 A1 discloses also an hybrid assembly.

Thus, the present invention relates to a hybrid drive assembly as defined in claim 1. Preferred embodiment of the invention are described in the dependent claims.

It is understood that the first electric machine is housed in an internal volume defined by the walls of the drive case and that the second electric machine and the gearbox are both housed in the internal volume defined by the walls of the gearbox case. In other words, the first electric machine is in one compartment and the second electric machine and the gearbox are in another compartment.

It should be noted that the heat exchanger is an element of the hybrid assembly dissociated from the drive housing and the gearbox housing, i.e. this heat exchanger is an element external to the internal volume defined by each of these housings.

The pump of the lubrication system is fluidly connected with the gearbox housing such that the lubrication fluid present in the gearbox housing can be circulated in the lubrication circuit by means of the pump. This pump may be internal to the gearbox housing, and in particular disposed against a bottom wall of the housing, or external to this gearbox housing, and fluidly connected to the housing via an orifice provided near the bottom wall of the housing.

The lubrication circuit passes through both the heat exchanger and the gearbox housing and is used to direct lubrication fluid to the electrical machine within the gearbox housing. In this way, the temperature regulation of the electric machine and the lubrication of the gearbox are advantageously carried out with the same fluid. More particularly, the lubrication fluid can be cooled within the external heat exchanger to be brought to a temperature adequate to cool the electrical machine, and this heat exchange has the advantage of raising the temperature of the lubrication fluid to give it viscosity properties suitable for lubricating the elements of the gearbox on which the lubrication fluid is directed at the output of the electrical machine present in the gearbox housing.

According to a preferred embodiment of the invention, the lubrication circuit extends at least in part through the heat exchanger, the gearbox housing, and the drive housing. The lubrication fluid is thus circulated throughout the hybrid assembly. The passage of the lubrication circuit, successively through each of these different elements of the hybrid assembly, makes it possible to ensure a plurality of functions by minimizing the number of fluid circuits involved in these functions.

According to a preferred embodiment of the invention, the lubrication circuit extends at least in part into a wall of the gearbox housing, the lubrication circuit comprising projection means configured to project lubrication fluid towards the second electric machine. The arrangement of the lubrication circuit within the wall of the gearbox housing makes it possible to limit the use of external hydraulic connections that may be subject to leaks. It is understood that a major part of the lubrication circuit is arranged directly in the wall of the casing, during the manufacture of said casing for example. The spraying means may be formed by simple orifices through which the lubrication fluid flows towards the second electric machine or may be formed by spraying nozzles projecting the lubrication fluid at a determined pressure towards the second electric machine.

According to a preferred embodiment of the invention, the lubrication circuit comprises at least one divergence point at which a first part of the lubrication circuit extends towards the second electric machine and a second part of the lubrication circuit extends towards the drive case.

According to a preferred embodiment of the invention, the second part of the lubrication circuit circulates in an input shaft of the gearbox extending at least partly in the drive housing and being connected in rotation to the first electric machine. It is understood that the primary shaft of the gearbox comprises a hollow portion within which the lubrication circuit passes and more particularly the second part of the lubrication circuit. The gearbox input shaft is arranged partly in the drive case, where it is connected with the first electric machine, and partly in the gearbox case, where it is connected with the gears of the gearbox. Lubrication fluid flowing within the primary shaft is intended to pass through the drive housing to exit into the gearbox housing, with the portion of the primary shaft present in the gearbox housing being radially perforated to allow passage of lubrication fluid.

According to a preferred embodiment of the invention, the primary shaft of the gearbox extends in a longitudinal main extension direction, the longitudinal end of the primary shaft of the gearbox arranged in the drive housing being covered by a cover attached to the drive housing, the second part of the lubrication circuit extending in part in the cover. In particular, the cover includes a sealing member that cooperates with the input shaft to provide continuity in flow between the portion of the lubrication circuit extending within a wall of the cover and the portion of the lubrication circuit extending within the input shaft.

According to a preferred embodiment of the invention, the first electric machine is an axial flux electric machine.

According to the invention, the first electrical machine comprises a rotor and a stator, the stator comprising a first stator element housed in a first chamber and a second stator element housed in a second chamber, the second portion of the lubrication circuit extending at least in part through one of the said chambers. It is understood that at least the first chamber or the second chamber is part of the lubrication circuit. The lubricating fluid is directly in contact with the stator element associated with said chamber.

According to a preferred embodiment of the invention, the lubricating fluid is a dielectric fluid.

According to a preferred embodiment of the invention, at least a portion of the second portion of the lubrication circuit is external to the drive case and the transmission case. This portion of the lubrication circuit is formed by a hydraulic fitting such as a hose.

According to a preferred embodiment of the invention, the at least a portion of the second portion of the lubrication circuit external to the drive case and the transmission case is connected to the cover. In other words, this portion external to the drive case extends via a hose from the point of divergence to a connection tip present on the cover. The lubrication fluid then flows into the cover and then into the input shaft via the sealing element.

According to a preferred embodiment of the invention, the second portion of the lubrication circuit extends at least into a wall of the drive case and into a wall of the transmission case. In particular, the second part of the lubrication circuit has a portion that extends in a sealed manner at the junction between a wall of the drive housing and a wall of the gearbox board.

According to a preferred embodiment of the invention, one of the chambers communicates with a discharge duct opening into the cover. The second part of the lubrication circuit thus passes through one of the chambers, which forms a relay between a duct formed within the drive housing and a duct formed within the cover, in particular to fill the inside of the gearbox input shaft arranged opposite this cover with lubrication fluid.

According to one characteristic of the invention, one of the chambers communicates with a communication conduit opening into the gearbox housing. In this way, a third part of the lubrication circuit is formed, which extends in parallel with the second part of the lubrication circuit, and which is intended to regulate the temperature of another chamber of an electric machine and to lubricate another area of the gearbox.

The invention also relates to a vehicle comprising a hybrid assembly according to any of the above features.

Other characteristics, details and advantages of the invention will become more clearly apparent on reading the following description, on the one hand, and exemplary embodiments given by way of non-limiting indication with reference to the appended schematic drawings, on the other hand, in which:
[Fig. 1] schematically represents a sectional view of a hybrid assembly according to an embodiment of the invention, wherein a lubrication system is configured to cool a second electric machine and to lubricate a gearbox, a first electric machine being cooled by a separate water circuit;
[Fig. 2] schematically represents the circulation of a lubrication fluid within the lubrication system according to the embodiment represented in Figure 1;
[Fig. 3] schematically represents a sectional view of a hybrid assembly according to another embodiment of the invention, wherein the lubrication system is configured this time to cool the first electric machine and the second electric machine and to lubricate the gearbox;
[Fig. 4] and a detail view of Figure 3, which makes the lubrication system more particularly visible at the first electrical machine;
[Fig. 5] schematically represents the circulation of the lubrication fluid within the lubrication system according to the embodiment represented in Figure 3.

In the Figures, the elements common to several Figures retain the same reference.

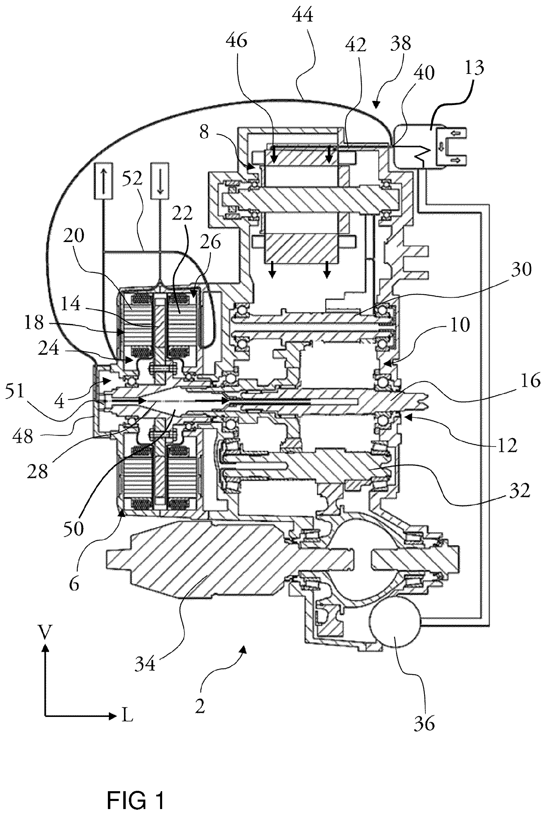

In the following description, reference will be made to an orientation as a function of the Longitudinal, Vertical and Transverse axes as they are arbitrarily defined by the trihedron L, V, T represented in Figures 1 to 4.

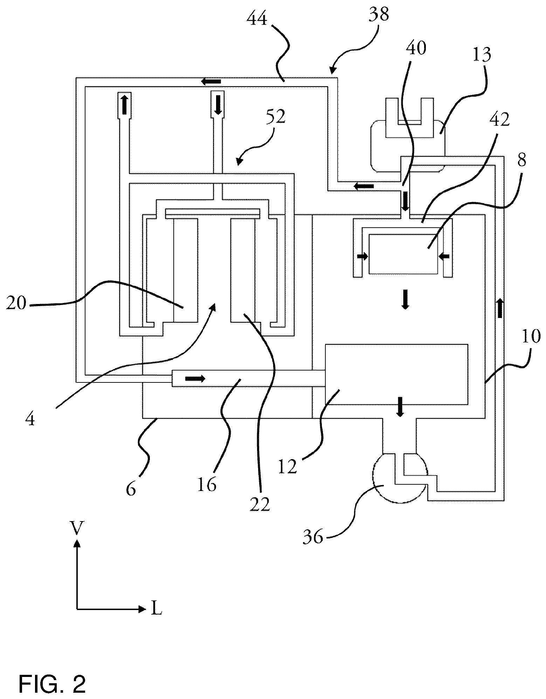

Figures 1 and 2 represent a hybrid assembly 2 according to an embodiment of the invention. More specifically, Figure 1 represents a cross-sectional view of the hybrid assembly 2 and Figure 2 represents a schematic view of the circulation of at least one lubricating fluid within the hybrid assembly 2 represented by Figure 1. It should be noted that in Figure 2 the circulation of the fluids involved in the hybrid assembly 2 is represented by solid arrows.

This hybrid assembly 2 comprises in particular a first electric machine 4 housed in a drive housing 6, a second electric machine 8 and a gearbox 12 housed in a gearbox housing 10 and a heat exchanger 13 outside the drive housing 6 and the gearbox housing 10.

The first electric machine 4 is an axial flow electric machine. This first electric machine 4 comprises, on the one hand, a rotor formed by a rotor disk 14 connected in rotation with a primary shaft of the gearbox 16 and, on the other hand, a stator 18 comprising a first stator element 20 and a second stator element 22 arranged axially one after the other, on either side of the rotor disk 14.

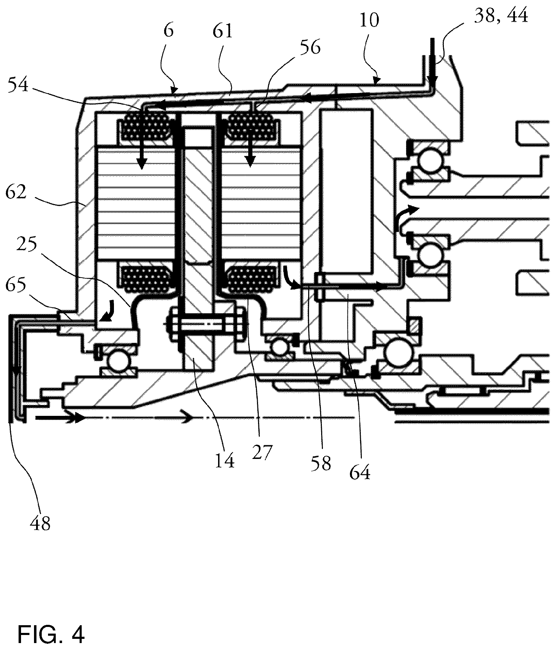

The first stator element 20 comprises a wound stator body housed in a first chamber 24 and the second stator element 22 comprises a wound stator body housed in a second chamber 26, the rotor disc 14 interposed between the stator elements participating in delimiting each of the two chambers 24, 26. As can be seen in Figure 4 in particular, which is a detail view of the hybrid assembly which relates in particular to the first electric machine, a seal 25, 27 is arranged in each of these first and second chambers 24, 26 to prevent a cooling fluid present in the chamber from flowing by gravity at the centre of the drive housing 6 towards the primary shaft 16.

The first chamber 24 thus extends at the periphery of the internal volume of the drive housing, around the primary shaft 16, being delimited radially on one side by the seal 25 which is specific to it and on the other side by an axial wall 61 of the drive housing 6, and being delimited axially by the rotor disc 14 and by a first radial wall 62 of the drive housing, turned towards the outside of the hybrid assembly.

The second chamber 26 also extends at the periphery of the internal volume of the drive housing, around the primary shaft 16, being delimited radially by the seal 27 which is specific to it and by an axial wall of the drive housing, in the extension of the axial wall 61 which participates in delimiting the first chamber 24, and being delimited axially by the rotor disc 14 and by a second radial wall 63 of the drive housing, opposite the gearbox casing 10.

The stator winding 18 is electrically powered by electrical connection means, not represented here, such that a magnetic field is generated at the first and second stator elements 20 and 22. This magnetic field is configured to move the rotor disc 14 about an axis of rotation 28.

The rotor disc 14 is connected in rotation with the primary shaft of the gearbox 16 such that the axis of rotation 28 of the rotor disc 14 is coaxial with the axis of rotation of the primary shaft of the gearbox 16. It will be understood that rotating the rotor disc 14 causes the primary shaft of the gearbox 16 to rotate.

As can be seen in Figure 1, the input shaft of the gearbox 16 extends in a longitudinal main direction of elongation, i.e. parallel to the axis L, partly in the drive housing 6 and partly in the gearbox housing 10. More specifically, the primary shaft of the gearbox 16 is connected in rotation at a longitudinal end to the first electric machine 4, and more specifically to the rotor disc 14, and by a longitudinal end opposite the gearbox 12. To this end, the primary shaft 16 passes through the second radial wall 63 of the drive housing, as well as a radial wall of the gearbox housing 10 arranged opposite this second radial wall 63.

In the example illustrated, without limiting the invention, the gearbox 12 comprises a first secondary drive shaft 30 and a second secondary drive shaft 32 each extending parallel to the primary shaft of the gearbox 16. The first secondary drive shaft 30 is capable of being connected in rotation, on the one hand, with the primary shaft of the gearbox 16 and, on the other hand, with the second electric machine 8. The second secondary drive shaft 32 is capable of being connected in rotation, on the one hand, with the primary shaft of the gearbox 16 and, on the other hand, with a transmission shaft 34. This transmission shaft 34 makes it possible to transmit the torque generated by the first electric machine 4 and the second electric machine 8 to the wheels of the vehicle to set it in motion.

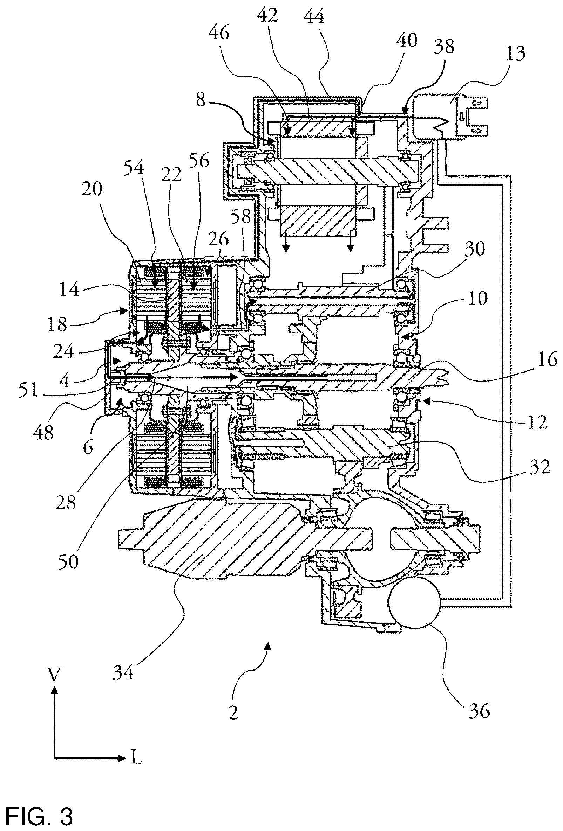

It should be noted that the gearbox 12 comprises a plurality of clutches, fixed pinions and idler pinions ensuring the passage of the torque generated by the first electric machine 4 and by the second electric machine 8 to the transmission shaft 34n, and that these clutches and pinions are here represented schematically or not, in particular in Figures 1 and 3, to make the other components of the hybrid assembly more visible. This torque is transmitted to the drive shaft 34, if necessary by increasing or reducing the rotational speed of the drive shaft 34 according to the fixed or idle pinions engaged by the dogs.

It is understood that the movement of all these elements within the gearbox 12 requires adequate lubrication to limit the impact of the friction forces of the parts with respect to each other.

For this purpose, the hybrid assembly 2 comprises a lubrication system comprising at least a pump 36 and a lubrication circuit 38, represented in more detail in Figure 2. The pump 36 is configured to allow the circulation of a lubrication fluid in the lubrication circuit 38. In the embodiment represented, the pump 36 makes it possible to recirculate the lubrication fluid dropped by gravity to the bottom of the gearbox casing 10, that is to say in the embodiment represented at the transmission shaft 34.

The lubrication fluid circulated by the pump 36 is sent into the lubrication circuit 38 in the direction of the heat exchanger 13. At this heat exchanger 13, a heat exchange takes place between the lubrication fluid and a heat transfer fluid. It should be noted that this portion of the lubrication circuit 38 joining the pump 36 and the heat exchanger 13 is external to the gearbox housing 10.

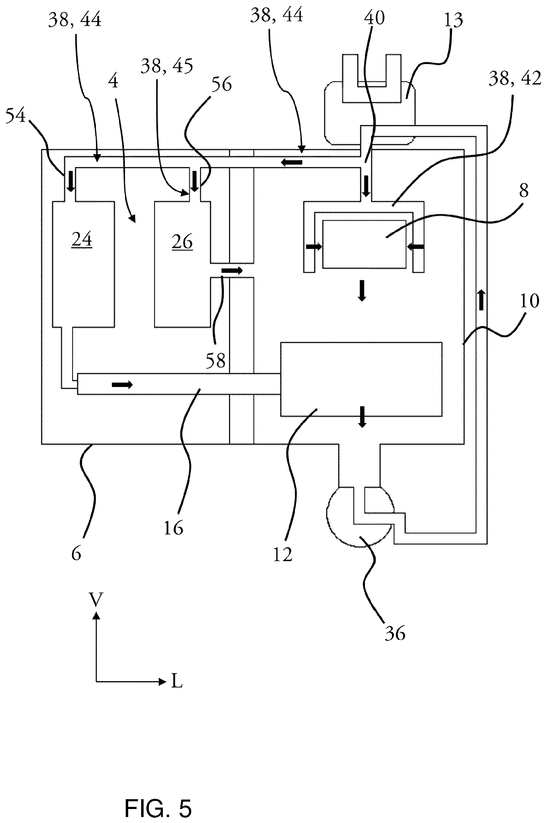

The lubrication fluid having carried out a heat exchange within the heat exchanger 13 circulates in the lubrication circuit 38 until it reaches a divergence point 40 at which the lubrication circuit 38 separates into a first part 42 and a second part 44. In the embodiment represented in Figures 1 and 2, this divergence point 40 is formed outside the transmission case 10 while in the embodiment represented in Figures 2 to 5, this divergence point is formed within the transmission case.

The first portion 42 of the lubrication circuit 38 extends at least in part, in the form of a duct, into a wall of the gearbox housing 10 defining an internal volume wherein the second electrical machine 8 and the gearbox 12 are located. Furthermore, said wall of the gearbox housing 10 comprises projection means 46 configured to project the lubrication fluid, circulating in the first portion 42 of the lubrication circuit 38, towards the second electric machine 8.

This projection means 46 may be, as represented, orifices provided in the wall of the gearbox casing 10. More precisely, these orifices open at one end into the first part 42 of the lubrication circuit 38 and at an opposite end into the gearbox casing 10. It is understood that these projection means 46 allow the lubrication fluid to flow from the first portion 42 of the lubrication circuit 38 to the second electrical machine 8. Alternatively, these spraying means 46 may be formed by spraying nozzles spraying the lubricating fluid in the direction of the second electric machine 8. It is notable that the lubrication fluid is a dielectric fluid that does not impair the operation of the second electric machine 8.

The first portion 42 of the lubrication circuit 38 thus extends from the point of divergence 40 to the projection means 46.

At the outlet of this projection means 46, the contact of the lubrication fluid with the second electric machine 8 generates an exchange of heat between the lubrication fluid and the second electric machine 8. This heat exchange may, if necessary, make it possible to regulate the temperature of the second electrical machine 8 while modifying the temperature of the lubrication fluid in the desired proportions. In particular, the lubrication fluid can cool the second electric machine, and all the more so when the lubrication fluid has been previously cooled in the heat exchanger 13. The lubrication fluid, heated by this heat exchange with the second electric machine and made less viscous, then flows by gravity to the gearbox 12 so that the lubrication fluid makes it possible to lubricate the gearbox 12. It is noteworthy that the increase in the temperature of the lubrication fluid may have made it possible to give the lubrication fluid an appropriate viscosity to carry out the lubrication of the gearbox 12.

It is understood that the gearbox 12 is arranged, when the hybrid assembly 2 equips the vehicle, below the second electric machine 8 with respect to the vertical axis V, so that the lubrication fluid flows by gravity from the second electric machine to the various pinions of the gearbox.

The lubrication fluid is then recovered at the bottom of the crankcase by the pump 36 and reinjected into the lubrication circuit.

The second portion 44 of the lubrication circuit 38 extends from the divergence point 40 to the drive housing 6. More specifically, in the embodiment represented in Figures 1 and 2, the second portion 44 of the lubrication circuit 38 extends externally to the drive housing 6 and the gearbox housing 10 and is formed, by way of example, by a hose, while in the embodiment represented in Figures 3 to 5, the second portion 44 of the lubrication circuit extends internally, in particular through several successive walls forming the drive housing 6 and the gearbox housing 10.

The second part 44 of the lubrication circuit 38 will first be described with reference to Figures 1 and 2. The second part 44 of the lubrication circuit 38, which extends outside the casings from the point of convergence, in particular in the form of a hose, reaches the drive housing 6 at a cover 48 associated with this drive housing. This cover 48 is fixed to the first radial wall 62 of the drive housing 6, so as to cover, in the longitudinal direction, the primary shaft of the gearbox 16.

The hose forming the second part 44 is connected to an end piece integral with the cover and which allows fluid communication between the hose and a channel internal to the cover which extends the second part 44 of the lubrication circuit 38. This internal channel opens onto a hollow portion 50 of the primary shaft of the gearbox 16, this junction being sealed by a sealing element fixed to the cover and which, in the embodiment represented, is formed by a lip ring 51.

In other words, in this embodiment, the second part 44 of the lubrication circuit 38 thus extends from the point of divergence 40 to the sealing element associated with the cover 48 and the hollow portion 50 of the primary shaft, being made successively by a hose external to the various casings of the hybrid assembly of the invention and by a pipe formed within a cover covering the primary shaft.

The lubrication circuit 38 also extends into the hollow portion 50 of the primary shaft of the gearbox 16, which for return is driven in rotation by the first electric machine 4. The hollow portion 50 of the primary shaft of the gearbox 16 comprises openings, not represented here, opening at one end into the hollow portion 50 of the primary shaft of the gearbox 16 and at an opposite end into the gearbox housing 10.

It is understood that the lubricating fluid is projected, by means of said openings, into the gearbox housing 10 and that it then flows to the aforementioned bottom of said gearbox housing 10. The lubrication fluid is then drawn off by the pump 36 and returned to the lubrication circuit 38 cyclically.

It should be noted that the projection of the lubrication fluid from the hollow portion 50 is, when the primary shaft of the gearbox 16 is rotated, facilitated by the centrifugal force exerted by the primary shaft of the gearbox 16 on the lubrication fluid. Moreover, rotation of the input shaft of the gearbox 16 allows the lubricating fluid to be projected uniformly throughout the gearbox casing 10.

As mentioned above, in the embodiment represented in Figures 1 and 2, the lubrication fluid makes it possible to carry out a heat exchange with the second electric machine 8 and to lubricate the gearbox 12. Regarding the lubrication of the gearbox 12, the lubrication fluid performs this function, on the one hand, by flowing by gravity from the second electric machine 8 and, on the other hand, by being projected from the hollow portion 50 of the primary shaft of the gearbox 16 through the aforementioned openings.

The cooling of the first electrical machine 4 is provided, in the embodiment represented, by a water circuit 52, independent of the lubrication circuit and wherein a cooling fluid circulates. The cooling fluid circulates in the wall of the drive housing 6, and more particularly in the walls of said drive housing 6 adjoining the first stator element 20 and the second stator element 22.

A particular embodiment of the invention will now be described, with reference to Figures 3 to 5, wherein the cooling of the second electric machine 8 and the lubrication of the gearbox is still provided by the lubrication fluid circulating in the lubrication circuit 38, but wherein, moreover, the cooling of the first electric machine 4 is also provided by this lubrication fluid, by means of a structural modification of the lubrication circuit.

The lubrication circuit 38 is modified in particular in that it no longer comprises a hose outside the casings but is integrated into the casings, with in particular the second part 44 of this lubrication circuit 38 which circulates from the point of convergence 40 within walls delimiting the casings and within the chambers 24, 26 of the first electric machine 4.

As represented in Figure 3, the point of divergence 40 of the lubrication circuit 38 is located in the wall of the gearbox housing 10. In accordance with the embodiment represented in Figure 1, the first portion 42 of the lubrication circuit 38 extends in the wall of the gearbox housing 10 toward the second electric machine 8. The lubricating fluid is then projected towards the second electric machine 8 from the projection means 46. The lubrication fluid then performs a heat exchange with the second electric machine 8 and then flows by gravity to the gears of the gearbox to perform its lubrication function.

The second part 44 of the lubrication fluid circuit this time extends, between the point of divergence 40 and the wall of the drive housing 6, within the wall of the gearbox housing 10.

At the junction between the drive housing 6 and the gearbox casing 10, sealing means are implemented to allow the continuity of the second part 44 of the lubrication circuit 38 from the wall of the gearbox casing 10 to a wall of the drive housing 6 and more particularly the axial wall 61 participating in radially delimiting both the first chamber 24 and the second chamber 26.

This portion of the second part 44 of the lubrication circuit 38 entering the wall of the drive housing 6 separates into a first branch 54 and a second branch 56. The first branch 54 is fluidly connected to the first chamber 24 of the stator 18 of the first electric machine 4 and the second branch 56 is connected to the second chamber 26 of this stator.

It should be noted that the first branch 54 comprises at least a first hole opening at one end into the first branch 54 and at an opposite end into the first chamber 24. Similar to the first branch 54, the second branch 56 comprises a second hole opening at one end into the second branch 54 and at an opposite end into the second chamber 26. Where appropriate, spray nozzles may be provided in place of the holes to allow the lubricating fluid to be sprayed onto the windings of the stator elements present in each chamber 24, 26.

It is understood that the first stator element 20 and the second stator element 22 each perform a heat exchange with the lubrication fluid that comes directly into contact with said stator elements 20 and 22. Here again, it is notable that the lubrication fluid is a dielectric fluid making it possible not to alter the operation of said stator elements 20, 22.

Each chamber is filled with lubricating fluid, wherein the stator elements are immersed, the lubricating fluid being in particular retained in each chamber by the seals 25, 27 which seal their respective chamber in the vicinity of the rotor disc 14. The lubrication fluid present in each chamber and raised in temperature by the calories recovered at the corresponding stator element is gradually replaced by the lubrication fluid, at a lower temperature arriving through the openings or nozzles at the end of the branches 54, 56. The arrival of fluid, under pressure, helps to push some of the fluid present in each chamber to allow it to be replaced as it goes along.

At least one discharge is provided in each chamber to allow the exit of a portion of the lubrication fluid.

As illustrated in particular by arrows visible in Figure 4, the lubrication fluid present in the first chamber 24 exits the latter, under the effect of the pressure generated by the fluid arriving specifically in this chamber, through a supply duct 65 provided both in the first radial wall 62 of the drive housing 6 and in the cover 48. The lubricating fluid pushed out of the first chamber 24 is then intended to circulate in the cover 48 and then, in accordance with what has been described in connection with Figure 1, enter the hollow portion 50 of the primary shaft of the gearbox 16.

As illustrated in particular by arrows visible in Figure 4, the lubrication fluid present in the second chamber 26 exits the latter, under the effect of the pressure generated by fluid arriving specifically in this chamber, through a communication duct 58 provided in the second radial wall 63 of the drive housing 6 and in the radial wall of the gearbox casing 10, such that the lubrication fluid present in the second chamber 26 is sent into the gearbox casing 10 to lubricate the gearbox 12, and more particularly here within one of the secondary drive shafts 30. A stud 64 is formed projecting from the radial wall of the gearbox housing 10 to come into contact with the second radial wall 63 of the drive housing 6, facing the part of the communication duct 58 formed in the second radial wall 63 of the drive housing 6, the stud being pierced to form part of this communication duct 58. It should be noted that sealing means are also implemented at the junction between the wall of the drive housing 6 and the wall of the gearbox casing 10, here the stud 64, to ensure a sealed circulation of the lubrication fluid within the communication duct 58.

In this embodiment, it is thus possible to identify a third part 45 of the lubrication circuit 38 formed successively by the second branch 56, the second chamber 26 of the axial drive motors and the communication duct 58. This third part 45 makes it possible to regulate the temperature of a chamber of the first electric machine 4 that was not regulated by the second part 44 of the lubrication circuit and also makes it possible to lubricate a secondary drive shaft, not lubricated by the second part 44 of the lubrication circuit.

In the example represented, it should be noted that only one port is formed in the first chamber 24 to communicate with the supply conduit 64 and only one port is formed in the second chamber 26 to communicate with the discharge conduit 58. It is understood, however, that without departing from the context of the invention, each chamber could be equipped with several orifices each communicating with a supply conduit or an evacuation conduit. In particular, an orifice could be arranged in the vicinity of the axial wall delimiting the chambers which is intended to be arranged vertically the lowest when the hybrid drive assembly is mounted on the vehicle.

In other words, in this embodiment illustrated in Figures 3 to 5, the second portion 44 of the lubrication circuit 38 thus extends from the point of divergence 40 to the sealing element associated with the cover 48 and the hollow portion 50 of the primary shaft, being made mainly within casing walls forming the hybrid assembly of the invention and by a pipe formed within a cover covering the primary shaft, each passage from one casing to the other or from one casing to the cover being sealed by appropriate means.

Furthermore, the second part 44 of the lubrication circuit further comprises a lubrication fluid buffer zone formed in the first chamber 24 of the first electric machine 4, this buffer zone being supplied by the first branch 54 and discharged by the discharge conduit 65.

Finally, the lubrication circuit is distinguished in that a third part 45 as mentioned extends in parallel with the second part 44.

Thus, in the embodiment represented in Figures 3 to 5, the lubrication fluid circulating in the different parts of the lubrication circuit makes it possible to carry out a heat exchange with the second electric machine 8 and to carry out a heat exchange with the first electric machine 4, it being noted that these temperature regulations are carried out substantially in parallel. During the same cycle, before reinjection via the pump 36, the lubrication fluid used to exchange calories with the first electric machine has not been heated by a prior passage within the second electric machine, and vice versa. The temperature regulation is thus particularly effective for the two electric machines because the temperature of the lubrication fluid in contact with these electric machines is substantially equal to its temperature at the outlet of the heat exchanger 13.

Moreover, this lubrication fluid allows the lubrication of the gearbox 12, on the one hand, by flowing by gravity from the second electric machine 8, on the other hand, by being projected from the hollow portion 50 of the primary shaft of the gearbox 16 through the aforementioned openings, and finally by being projected from the inside of a secondary shaft.

This embodiment illustrated in Figures 3 to 5 is thus particularly advantageous in that a lubrication circuit, internal to the hybrid drive assembly and therefore without external hose penalizing the size of the hybrid assembly, makes it possible to effectively regulate the temperature of two separate electrical machines and to lubricate effectively, because by being introduced into the board from several zones, the gearbox.

The present invention achieves the purpose it set by providing a hybrid drive assembly for a vehicle wherein the cooling of at least one of the electric machines and the lubrication of the gearbox are performed by a same lubrication circuit. Such pooling of the lubrication circuit to provide both cooling and lubrication increases the compactness of the hybrid assembly and reduces the risk of leakage that could occur in a hybrid assembly multiplying the circuits.

## Claims

1. Hybrid drive assembly (2) for a vehicle comprising at least one gearbox (12), a first electric machine (4) and a second electric machine (8),
- the first electric machine (4) being housed in a drive housing (6) of the hybrid assembly (2), the second electric machine (8) and the gearbox (12) being housed in a gearbox housing (10) of the hybrid assembly (2),
- the hybrid assembly (2) comprising a lubrication system comprising at least one pump (36) and a lubrication circuit (38), the pump (36) being configured to circulate a lubrication fluid in the lubrication circuit (38),
- the drive housing (6) and the gearbox housing being separate from each other, **characterized in that**, the hybrid assembly (2) comprises a heat exchanger (13) external to the drive housing (6) and the gearbox housing (10),
- the lubrication circuit (38) extends at least in part through the heat exchanger (13) and the gearbox housing (10),
- wherein the first electrical machine (4) comprises a rotor and a stator (18), the stator (18) comprising a first stator element (20) housed in a first chamber (24) and a second stator element (22) housed in a second chamber (26), a second portion (44) of the lubrication circuit (38) extending at least partially through one of the said chambers (24, 26).

2. Hybrid assembly (2) according to the preceding claim, wherein the lubrication circuit (38) extends at least partially into a wall of the gearbox housing (10), the lubrication circuit (38) comprising projection means (46) configured to project lubrication fluid towards the second electric machine (8).

3. Hybrid assembly (2) according to any of the preceding claims, wherein the lubrication circuit (38) comprises at least one divergence point (40) at which a first portion (42) of the lubrication circuit (38) extends towards the second electric machine (8) and the second portion (44) of the lubrication circuit (38) extends towards the drive housing (6).

4. Hybrid assembly (2) according to the preceding claim, wherein the second part (44) of the lubrication circuit (38) circulates in a primary shaft of the gearbox (16) extending at least partly in the drive housing (6) and being connected in rotation to the first electric machine (4).

5. Hybrid assembly (2) according to the preceding claim, wherein the primary shaft of the gearbox (16) extends in a longitudinal main extension direction, the longitudinal end of the primary shaft of the gearbox (16) arranged in the drive housing (6) being covered by a cover (48) attached to the drive housing (6), the second part (44) of the lubrication circuit (38) extending in part into the cover (48).

6. Hybrid assembly (2) according to any of claims 1-2 or 4-5 in combination with claim 3,
wherein at least a portion of the second portion (44) of the lubrication circuit (38) is external to the drive housing (6) and the transmission housing (10).

7. Hybrid assembly (2) according to the preceding claim, in combination with claim 5, wherein the at least a portion of the second portion (44) of the lubrication circuit (38) external to the drive housing and the transmission housing is connected to the cover.

8. Hybrid assembly (2) according to any of claims 1-2 or 4-5, in combination with claim 3,
wherein the second portion (44) of the lubrication circuit (38) is formed in a wall of the gearbox housing (10) and in a wall of the drive housing (6).

9. Hybrid assembly (2) according to claim 1 in combination with claim 5, wherein one of the chambers (24, 26) communicates with a discharge duct (65) opening into the cover (48).

10. Hybrid assembly (2) according to claim 1 or 9, wherein one of the chambers (24, 26) communicates with a communication conduit (58) opening into the gearbox housing (10).

11. Vehicle comprising a hybrid assembly (2) according to any one of claims 1 to 10.

## Patentansprüche

1. Hybridantriebsanordnung (2) für ein Fahrzeug, umfassend mindestens ein Getriebe (12), eine erste elektrische Maschine (4) und eine zweite elektrische Maschine (8), wobei
- die erste elektrische Maschine (4) in einem Antriebsgehäuse (6) der Hybridanordnung (2) untergebracht ist, die zweite elektrische Maschine (8) und das Getriebe (12) in einem Getriebegehäuse (10) der Hybridanordnung (2) untergebracht sind,
- die Hybridanordnung (2) ein Schmiersystem umfasst, das mindestens eine Pumpe (36) und einen Schmierkreislauf (38) umfasst, wobei die Pumpe (36) dazu konfiguriert ist, ein Schmierfluid in dem Schmierkreislauf (38) umzuwälzen,
- das Antriebsgehäuse (6) und das Getriebegehäuse voneinander getrennt sind, **dadurch gekennzeichnet, dass** die Hybridanordnung (2) einen Wärmetauscher (13) außerhalb des Antriebsgehäuses (6) und des Getriebegehäuses (10) umfasst,
- der Schmierkreislauf (38) mindestens teilweise durch den Wärmetauscher (13) und das Getriebegehäuse (10) verläuft,
- wobei die erste elektrische Maschine (4) einen Rotor und einen Stator (18) umfasst, wobei der Stator (18) ein erstes Statorelement (20), das in einer ersten Kammer (24) untergebracht ist, und ein zweites Statorelement (22), das in einer zweiten Kammer (26) untergebracht ist, umfasst, wobei sich ein zweiter Abschnitt (44) des Schmierkreislaufs (38) mindestens teilweise durch eine der Kammern (24, 26) erstreckt.

2. Hybridanordnung (2) nach dem vorhergehenden Anspruch, wobei sich der Schmierkreislauf (38) mindestens teilweise in eine Wand des Getriebegehäuses (10) erstreckt, wobei der Schmierkreislauf (38) Spritzmittel (46) umfasst, die dazu konfiguriert sind, Schmierfluid in Richtung der zweiten elektrischen Maschine (8) zu spritzen.

3. Hybridanordnung (2) nach einem der vorhergehenden Ansprüche, wobei der Schmierkreislauf (38) mindestens einen Verzweigungspunkt (40) umfasst, an dem sich ein erster Abschnitt (42) des Schmierkreislaufs (38) in Richtung der zweiten elektrischen Maschine (8) erstreckt und sich der zweite Abschnitt (44) des Schmierkreislaufs (38) in Richtung des Antriebsgehäuses (6) erstreckt.

4. Hybridanordnung (2) nach dem vorhergehenden Anspruch, wobei der zweite Abschnitt (44) des Schmierkreislaufs (38) in einer Primärwelle des Getriebes (16) zirkuliert, die sich mindestens teilweise in dem Antriebsgehäuse (6) erstreckt und drehfest mit der ersten elektrischen Maschine (4) verbunden ist.

5. Hybridanordnung (2) nach dem vorhergehenden Anspruch, wobei sich die Primärwelle des Getriebes (16) in einer Hauptlängserstreckungsrichtung erstreckt, wobei das Längsende der Primärwelle des Getriebes (16), das in dem Antriebsgehäuse (6) angeordnet ist, durch eine Abdeckung (48) abgedeckt ist, die an dem Antriebsgehäuse (6) angebracht ist, wobei sich der zweite Abschnitt (44) des Schmierkreislaufs (38) teilweise in die Abdeckung (48) erstreckt.

6. Hybridanordnung (2) nach einem der Ansprüche 1 bis 2 oder 4 bis 5 in Kombination mit Anspruch 3, wobei mindestens ein Teil des zweiten Abschnitts (44) des Schmierkreislaufs (38) außerhalb des Antriebsgehäuses (6) und des Getriebegehäuses (10) liegt.

7. Hybridanordnung (2) nach dem vorhergehenden Anspruch in Kombination mit Anspruch 5, wobei der mindestens eine Teil des zweiten Abschnitts (44) des Schmierkreislaufs (38), der außerhalb des Antriebsgehäuses und des Getriebegehäuses liegt, mit der Abdeckung verbunden ist.

8. Hybridanordnung (2) nach einem der Ansprüche 1 bis 2 oder 4 bis 5 in Kombination mit Anspruch 3, wobei der zweite Abschnitt (44) des Schmierkreislaufs (38) in einer Wand des Getriebegehäuses (10) und in einer Wand des Antriebsgehäuses (6) ausgebildet ist.

9. Hybridanordnung (2) nach Anspruch 1 in Kombination mit Anspruch 5, wobei eine der Kammern (24, 26) mit einem Abführkanal (65) in Verbindung steht, der in die Abdeckung (48) mündet.

10. Hybridanordnung (2) nach Anspruch 1 oder 9, wobei eine der Kammern (24, 26) mit einem Verbindungskanal (58) in Verbindung steht, der in das Getriebegehäuse (10) mündet.

11. Fahrzeug, umfassend eine Hybridanordnung (2) nach einem der Ansprüche 1 bis 10.

## Revendications

1. Ensemble d'entraînement hybride (2) pour un véhicule comprenant au moins une boîte de vitesses (12), une première machine électrique (4) et une deuxième machine électrique (8),
- la première machine électrique (4) étant logée dans un carter d'entraînement (6) de l'ensemble hybride (2), la deuxième machine électrique (8) et la boîte de vitesses (12) étant logées dans un carter de boîte de vitesses (10) de l'ensemble hybride (2),
- l'ensemble hybride (2) comprenant un système de lubrification comprenant au moins une pompe (36) et un circuit de lubrification (38), la pompe (36) étant configurée pour faire circuler un fluide de lubrification dans le circuit de lubrification (38),
- le carter d'entraînement (6) et le carter de boîte de vitesses étant séparés l'un de l'autre, **caractérisé en ce que** l'ensemble hybride (2) comprend un échangeur de chaleur (13) externe au carter d'entraînement (6) et au carter de boîte de vitesses (10),
- le circuit de lubrification (38) s'étendant au moins en partie à travers l'échangeur de chaleur (13) et le carter de boîte de vitesses (10),
- dans lequel la première machine électrique (4) comprend un rotor et un stator (18), le stator (18) comprenant un premier élément de stator (20) logé dans une première chambre (24) et un deuxième élément de stator (22) logé dans une deuxième chambre (26), une deuxième partie (44) du circuit de lubrification (38) s'étendant au moins partiellement à travers l'une desdites chambres (24, 26).

2. Ensemble hybride (2) selon la revendication précédente, dans lequel le circuit de lubrification (38) s'étend au moins partiellement dans une paroi du carter de boîte de vitesses (10), le circuit de lubrification (38) comprenant des moyens de projection (46) configurés pour projeter un fluide de lubrification vers la deuxième machine électrique (8).

3. Ensemble hybride (2) selon l'une quelconque des revendications précédentes, dans lequel le circuit de lubrification (38) comprend au moins un point de divergence (40) au niveau duquel une première partie (42) du circuit de lubrification (38) s'étend vers la deuxième machine électrique (8) et la deuxième partie (44) du circuit de lubrification (38) s'étend vers le carter d'entraînement (6).

4. Ensemble hybride (2) selon la revendication précédente, dans lequel la deuxième partie (44) du circuit de lubrification (38) circule dans un arbre primaire de la boîte de vitesses (16) s'étendant au moins partiellement dans le carter d'entraînement (6) et connecté en rotation à la première machine électrique (4).

5. Ensemble hybride (2) selon la revendication précédente, dans lequel l'arbre primaire de la boîte de vitesses (16) s'étend dans une direction d'extension principale longitudinale, l'extrémité longitudinale de l'arbre primaire de la boîte de vitesses (16) agencée dans le carter d'entraînement (6) étant recouverte par un couvercle (48) fixé au boîtier d'entraînement (6), la deuxième partie (44) du circuit de lubrification (38) s'étendant partiellement dans le couvercle (48).

6. Ensemble hybride (2) selon l'une quelconque des revendications 1-2 ou 4-5 en combinaison avec la revendication 3, dans lequel au moins une partie de la deuxième partie (44) du circuit de lubrification (38) est externe au carter d'entraînement (6) et au carter de transmission (10).

7. Ensemble hybride (2) selon la revendication précédente, en combinaison avec la revendication 5, dans lequel au moins une partie de la deuxième partie (44) du circuit de lubrification (38) externe au carter d'entraînement et au carter de transmission est connectée au couvercle.

8. Ensemble hybride (2) selon l'une quelconque des revendications 1-2 ou 4-5, en combinaison avec la revendication 3, dans lequel la deuxième partie (44) du circuit de lubrification (38) est formée dans une paroi du carter de boîte de vitesses (10) et dans une paroi du carter d'entraînement (6).

9. Ensemble hybride (2) selon la revendication 1 en combinaison avec la revendication 5, dans lequel l'une des chambres (24, 26) communique avec un conduit de décharge (65) débouchant dans le couvercle (48).

10. Ensemble hybride (2) selon la revendication 1 ou 9, dans lequel l'une des chambres (24, 26) communique avec un conduit de communication (58) débouchant dans le carter de boîte de vitesses (10).

11. Véhicule comprenant un ensemble hybride (2) selon l'une quelconque des revendications 1 à 10.
